# EUROPÄISCHE PATENTSCHRIFT

(11) **EP 0 515 725 B1**
(45) Veröffentlichungstag und Bekanntmachung des Hinweises auf die Patenterteilung: **30.08.1995**
(21) Anmeldenummer: 91109399.5
(22) Anmeldetag: 08.06.1991
(51) Int. Cl.: G02B 21/34

(54) **Objektträger mit Rahmen**
Microscope slide with frame
Lame porte-objets avec cadre

(30) Priorität: 31.05.1991 DE 4117791
(43) Veröffentlichungstag der Anmeldung: 02.12.1992
(73) Patentinhaber: WALDEMAR KNITTEL GLASBEARBEITUNGS GmbH & CO., D-38114 Braunschweig (DE)
(72) Erfinder: Menzel, Gerhard, W-3300 Braunschweig (DE)
(74) Vertreter: Gramm, Werner, Prof., Dipl.-Ing.

(56) Entgegenhaltungen:
- DE-A- 3 830 721
- US-A- 1 996 141
- US-A- 3 532 412
- US-A- 3 620 596
- PATENT ABSTRACTS OF JAPAN, Band 5, Nr. 173 (P-87)(845), 5. November 1981 & JP A 56101537

## Beschreibung

Die Erfindung betrifft einen Objektträger nach dem Oberbegriff des Anspruchs 1.

Die US-A-3 620 596 offenbart einen derartigen, insbesondere für ein Dunkelfeldmikroskop bestimmten Objektträger, der eine aus Kunststoff bestehende Tragplatte aufweist, die eine Dicke von etwa 1,6 mm sowie eine Ausnehmung aufweist, in der eine aus Glas bestehende Deckplatte festgelegt ist, deren Dicke zwischen etwa 0,15 und 0,20 mm liegt.

Objektträger sind z. B. auch in der EP-A 0 109 208 dargestellt und beschrieben. Demnach bestehen diese vorbekannten Objektträger ausschließlich aus einer Glasplatte, auf der ein Beschriftungsfeld vorgesehen sein kann. Dieses Beschriftungsfeld kann hergestellt werden durch einen materialabtragenden Mattschliff oder aber durch den Aufdruck einer beschriftbaren Beschichtung. Bei allen Ausführungsformen ist eine Bearbeitung der vier Kanten der Glasplatte erforderlich, um Verletzungen beim Hantieren mit diesen Glasplatten zu vermeiden. Fur den Randschliff sind verschiedene Formen wie z. B. Dachschliff, Rundschliff oder Anfasung bekannt geworden. In jedem Fall ist die Bearbeitung der vier Glasplattenränder aufwendig und dementsprechend kostspielig.

In großem Umfange werden auch Objektträger ohne jede Beschriftungsmöglichkeit verwendet. Diese Objektträger bestehen dann jeweils nur aus einer allseitig kantenbearbeiteten Glasplatte. Insbesondere bei diesen Ausführungsformen ergeben sich durch die plane Auflage der einzelnen Glasplatten aneinander im Stapel Probleme. So neigen diese Glasplatten zum Kleben aneinander. Durch Relativverschiebung gegeneinander ergeben sich Kratzer auf der Glasseitenoberfläche.

Der Erfindung liegt die Aufgabe zugrunde, einen Objektträger zu entwickeln, der Vorteile in der Herstellung sowie seiner Handhabung aufweist.

Diese Aufgabe wird erfindungsgemäß gelöst durch die Merkmale des Anspruchs 1. Weiterbildungen ergeben sich aus den Unteransprüchen. Dieser Kunststoffrahmen kann ein Spritzgußteil aus Thermoplast oder ein Druckgußteil aus Duroplast sein.

Erfindungsgemäß ist der Kunststoffrahmen an einer Schmalseite zu einem Kopfstück verbreitert, das als Griff dient und erfindungsgemäß auf zumindest einer Flachseite als Beschriftungsfeld ausgebildet sein kann. Hierfür ist es zweckmäßig, wenn die das Beschriftungsfeld bildende Oberfläche des Kopfstückes erodiert ist.

Die Anordnung des Kopfstückes ermöglicht auch eine die Handhabung des Objektträgers erleichternde farbige Gestaltung und/oder die Anbringung eines sonstigen Hinweises zur Kennzeichnung einer bestimmten Seite der Glasplatte. Dadurch wird es auch möglich, daß die Glasplatte auf ihrer einen Oberseite benetzbar und auf ihrer gegenüberliegenden Oberseite adhäsiv ausgebildet ist, wofür das Kopfstück des Kunststoffrahmens auf seinen beiden Flachseiten eine unterschiedliche Markierung aufweist.

Der Kunststoffrahmen ist ein Spritz- oder Druckgußteil, wobei es zweckmäßig ist, wenn die Glasplatte in den Kunststoffrahmen eingeklipst ist. Hierbei ist es erfindungsgemäß vorteilhaft, wenn der Kunststoffrahmen den Rand der Glasplatte nur an zwei sich gegenüberliegenden Seiten formschlüssig übergreift. Dabei ist es zweckmäßig, wenn die beiden vom Kunststoffrahmen formschlüssig übergriffenen Ränder der Glasplatte mit einem Dachschliff versehen sind.

Da erfindungsgemäß nur die beiden Schmalseiten der Glasplatte formschlüssig übergriffen werden können, ist es möglich, die Längskanten der Glasplatte unbearbeitet zu lassen, so daß sich bei der Bearbeitung der Glasplatten eine erhebliche Einsparung ergibt.

Die Dicke des Kunststoffrahmens ist nur wenige Hundertstel mm dicker als die der Glasplatte. Hierdurch läßt sich die unmittelbare Auflage von Glasplatten aneinander verhindern. Dadurch lassen sich zugleich ein Verkleben der Glasplatten aneinander aber auch ein gegenseitiges Verkratzen der Glasplatten vermeiden. Da die Glasplatten nicht mehr unmittelbar aufeinander liegen, ergibt sich auch eine längere Lagerfähigkeit.

Eine die Flachseite der Glasplatte nur geringfügig überragende Auflagefläche läßt sich bei dem als Spritz- oder Druckgußteil ausgebildeten Kunststoffrahmen auch dadurch erzielen, daß die Anspritzpunkte des Kunststoffrahmens auf dessen Flachseite verlegt werden. Diese Anspritzpunkte haben ebenfalls nur eine Höhe von wenigen Hundertstel mm und sind daher mit bloßem Auge kaum zu erkennen, verhindern aber die unmittelbare Auflage gestapelter Glasplatten aneinander, so daß sich ebenfalls die vorstehend genannten Vorteile erzielen lassen.

Der erfindungsgemäße Objektträger weist gegenüber den vorbekannten Ausführungsformen ein geringeres Gewicht auf. Der die Glasplatte allseitig umschließende Kunststoffrahmen verhindert Transportschäden sowie Schneidverletzungen bei der Handhabung und ermöglicht eine saubere Verpackung der Objektträger, da Abrieb durch scharfe Glaskanten an der Schachtel nicht mehr auftreten kann. Der Kunststoffrahmen ermöglicht in einfacher Weise eine Markierung durch verschiedene Farben. Das Kopfstück ermöglicht eine beidseitige Beschriftung.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung dargestellt. Es zeigen:
- **Figur 1 -**: einen Objektträger in Draufsicht und
- **Figur 2 -**: den Objektträger gemäß **Figur 1** im Längsschnitt.

Der dargestellte Objektträger besteht aus einer streifenförmigen Glasplatte 1, die in einen Kunststoffrahmen 2 eingeklipst ist. Der Kunststoffrahmen 2 ist an seiner einen Schmalseite zu einem Kopfstück 3 verbreitert.

Der Kunststoffrahmen 2 übergreift die Glasplatte 1 formschlüssig nur an deren beiden Schmalseiten, deren Ränder mit einem Dachschliff 4 versehen sind, wie es das in vergrößertem Maßstab dargestellte Detail X erkennen läßt. Die diesen Dachschliff 4 der Glasplatte 1 übergreifenden Abschnitte 2a des Kunststoffrahmens 2 weisen jeweils eine dem Randschliff angepaßte Einklipsnut 5 auf. Sind die beiden Schmalseiten der Glasplatte 1 am Rand mit einem Dachschliff 4 versehen, ist die Einklipsnut 5 im Querschnitt entsprechend dreiecksförmig ausgebildet. Bei einem Rundschliff entspräche der Querschnitt der Einklipsnut 5 angenähert einer Halbkreisfläche.

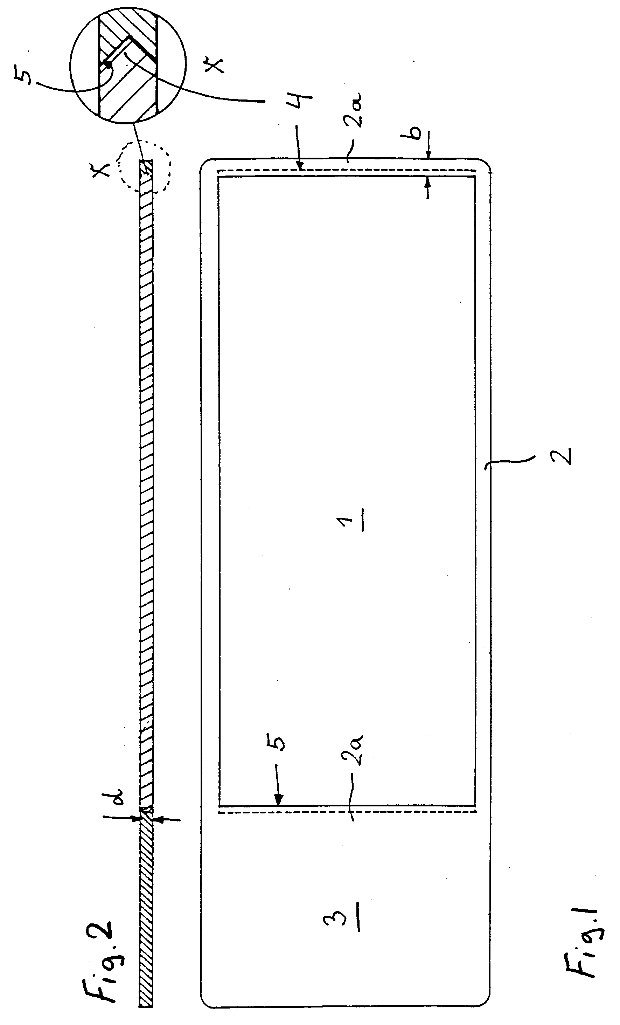

Die Breite b des Kunststoffrahmens 2 beträgt an den beiden Längsabschnitten sowie an dem in der **Figur 1** rechts liegenden Schmalseiten - Abschnitt 2a etwa 1,5 mm. Das Kopfstück 3 kann z. B. 18 mm lang sein, wenn die Gesamtbreite des Objektträgers 25,8 mm beträgt.

Der dargestellte Kunststoffrahmen 2 ist ein Spritz- oder Druckgußteil. Dabei kann der Außenrand des Kunststoffrahmens in der Form einer geschliffenen Glasplatten-Außenkante ausgebildet sein. Bisher haben die bekannt gewordenen Glasplatten einen Außenkantenschliff in Form eines Dach- oder Randschliffs oder aber einer Anfasung. Auf Kundenwunsch kann der Außenrand des Kunststoffrahmens entsprechend gestaltet werden.

## Patentansprüche

1. Objektträger in Form einer streifenförmigen Glasplatte (1), deren Rand allseitig von einem Kunststoffrahmen (2) umschlossen ist, der an einer Schmalseite zu einem auf zumindest einer Flachseite als Beschriftungsfeld ausgebildeten Kopfstück (3) verbreitert ist und eine größere Dicke (d) aufweist als die Glasplatte (1), **dadurch gekennzeichnet** daß der Kunststoffrahmen (2) ein Spritz- oder Druckgußteil ist, das den Rand der Glasplatte (1) an zumindest zwei sich gegenüberliegenden Seiten formschlüssig übergreift, nur wenige Hundertstel mm dicker ist als die Glasplatte (1) und außerhalb des Kopfstückbereiches eine Breite von etwa 1,5 mm aufweist.

2. Objektträger nach Anspruch 1, **dadurch gekennzeichnet**, daß die Glasplatte (1) in den Kunststoffrahmen (2) eingeklipst ist.

3. Objektträger nach Anspruch 2, **dadurch gekennzeichnet**, daß die den Rand der Glasplatte (1) formschlüssig übergreifenden Abschnitte (2a) des Kunststoffrahmens (2) eine dem Randschliff (4) der Glasplatte (1) angepaßte Einklipsnut (5) aufweisen.

4. Objektträger nach einem der Ansprüche 1 bis 3, **dadurch gekennzeichnet**, daß Anspritzpunkte des Kunststoffrahmens (2) auf dessen Flachseite liegen.

5. Objektträger nach einem der vorhergehenden Ansprüche, **dadurch gekennzeichnet**, daß die Oberfläche des Kopfstückes (3) zur Bildung des Beschriftungsfeldes erodiert ist.

6. Objektträger nach einem der vorhergehenden Ansprüche, **dadurch gekennzeichnet**, daß der Kunststoffrahmen (2) farbig gestaltet ist.

7. Objektträger nach einem der vorhergehenden Ansprüche, **dadurch gekennzeichnet**, daß die Glasplatte (1) auf ihrer einen Oberseite benetzbar und auf ihrer gegenüberliegenden Oberseite adhäsiv ausgebildet ist, und daß das Kopfstück (3) des Kunststoffrahmens (2) auf seinen beiden Flachseiten eine unterschiedliche Markierung aufweist.

8. Objektträger nach einem der vorhergehdnen Ansprüche, **dadurch gekennzeichnet**, daß der Außenrand des Kunststoffrahmens (2) in der Form einer geschliffenen Glasplatten-Außenkante ausgebildet ist.

## Claims

1. A microscope slide in the form of a strip-shaped glass plate (1), the edges of which are enveloped by a plastics material frame (2), which is extended on one short side to provide a head end (3) as a labelling region on at least one flat side, the said head end (3) being of greater thickness (d) than the glass plate (1), **characterised in that** the plastics material frame (2) is an injection-moulded or diecast part, which overlaps the edge of the glass plate (1) with positive locking on at least two opposite sides, is only a few hundredths of a millimetre thicker than the glass plate (1) and outside of the head end area has a width of approximately 1.5 mm.

2. A microscope slide according to claim 1, **characterised in that** the glass plate (1) is clipped into the plastics material frame (2).

3. A microscope slide according to claim 2, **characterised in that** the sections (2a) of the plastics material frame (2) overlapping the edge of the glass plate (1) with positive locking are provided with a clip-in groove (5) matched to the ground edge (4) of the glass plate (1).

4. A microscope slide according to any one of claims 1 to 3, **characterised in that** the gate marks of the plastics material frame (2) lie on its flat side.

5. A microscope slide according to any preceding claim, **characterised in that** the surface of the head end (3) is roughed to form the labelling region.

6. A microscope slide according to any preceding claim, **characterised in that** the plastics material frame (2) is coloured.

7. A microscope slide according to any preceding claim, **characterised in that** the glass plate (1) is wettable on one upper side and is adhesive on the opposite facing upper side, and that the head end (3) of the plastics material frame (2) has a different marking on its two flat sides.

8. A microscope slide according to any preceding claim, **characterised in that** the outer edge of the plastics material frame (2) is in the form of a ground glass plate outer edge.

## Revendications

1. Porte-objet sous forme d'une plaque de verre en forme de bande (1), dont le bord est entouré de tous côtés d'un cadre en matière synthétique (2), qui en un petit côté est élargi en une pièce de tête (3) agencée en zone d'inscription au moins sur un côté plat, et présente une plus grande épaisseur (d) que la plaque de verre (1), caractérisé en ce que le cadre en matière synthétique (2) est une pièce de moulage par injection ou sous pression, qui chevauche le bord de la plaque de verre (1) de manière verrouillante en au moins deux côtés mutuellement opposés, n'a que quelques centièmes de millimètres d'épaisseur de plus que la plaque de verre (1) et présente en-dehors de la région de la pièce de tête une largeur d'environ 1,5 mm.

2. Porte-objet selon la revendication 1, caractérisé en ce que la plaque de verre (1) est encliquetée dans le cadre en matière synthétique (2).

3. Porte-objet selon la revendication 2, caractérisé en ce que les parties (2a) du cadre en matière synthétique (2) qui chevauchent de manière verrouillante le bord de la plaque de verre (1) présentent une rainure d'encliquetage (5) adaptée à la section polie (4) du bord de la plaque de verre (1).

4. Porte-objet selon l'une des revendications 1 à 3, caractérisé en ce que des points d'injection du cadre en matière synthétique (2) sont situés sur son côté plat.

5. Porte-objet selon l'une des revendications précédentes, caractérisé en ce que la surface de la pièce de tête (3) est érodée pour constituer la zone d'inscription.

6. Porte-objet selon l'une des revendications précédentes, caractérisé en ce que le cadre en matière synthétique (2) présente un aménagement coloré.

7. Porte-objet selon l'une des revendications précédentes, caractérisé en ce que la plaque de verre (1) est réalisée mouillable sur l'un de ses côtés supérieurs et adhésive sur son côté supérieur opposé, et en ce que la pièce de tête (3) du cadre en matière synthétique (2) présente un marquage différencié sur ses deux côtés plats.

8. Porte-objet selon l'une des revendications précédentes, caractérisé en ce que le bord extérieur du cadre en matière synthétique (2) est réalisé avec la forme d'une arête extérieure polie de plaque de verre.
